# EUROPEAN PATENT SPECIFICATION

(11) **EP 3 759 754 B1**
(45) Date of publication and mention of the grant of the patent: **06.10.2021**
(21) Application number: 19706415.7
(22) Date of filing: 11.02.2019
(51) Int. Cl.: H01M 4/1391, H01M 4/505, H01M 10/0525

(54) **POSITIVE ELECTRODE SLURRY FOR LI-ION BATTERIES**
POSITIVELEKTRODENAUFSCHLÄMMUNG FÜR LITHIUMIONENBATTERIEN
SUSPENSION D'ÉLECTRODE POSITIVE POUR BATTERIES AU LITHIUM-ION

(30) Priority: 26.02.2018 EP 18158504
(43) Date of publication of application: 06.01.2021
(73) Proprietor: Umicore, 1000 Brussels (BE); Umicore Korea Ltd., Cheonan-si 330-200 (KR)
(72) Inventor: KIM, Jeong-Rae, Cheonan-si Cheonan-si 331-200 (KR); BRIDEL, Jean-Sébastien, Cheonan-si Cheonan-si 331-200 (KR); MIN, Sul-Hee, Cheonan-si Cheonan-si 331-200 (KR); LEE, Jong-Ju, Cheonan-si Cheonan-si 331-200 (KR)
(74) Representative: Knockaert, Guy
(86) International application number: PCT/EP2019/053253
(87) International publication number: WO 2019/162119

(56) References cited:
- EP-A1- 2 523 240
- WO-A2-01/13443
- US-A1- 2017 207 442

## Description

### Technical field and background

This invention relates to a positive electrode slurry composition in the preparation of a rechargeable lithium battery. More particularly, the positive electrode slurry contains a lithium transition metal based oxide and an additive, providing benefits to full cells in the aspect of cycle life, particularly at high temperature, internal resistance and thus power behavior.

Layered lithium metal oxides are widely used as commercial cathode material for lithium ion batteries, mainly due to their high capacities. Recently however, with the increased use of lithium ion batteries in portable electronic devices, electric vehicles and other emerging platforms, for example power tools, there is a strong demand for batteries with a good power performance as well as a good cycle stability. Typical layered oxides include lithium cobalt oxide (LCO) and lithium nickel based oxide (lithium nickel-manganese-cobalt oxides or NMC, and lithium nickel-cobalt-aluminium oxide or NCA). Cycle life performance and power performance can be directly measured in a standard cell. The internal resistance is a key parameter to determine the power performance property. The lower the resistance, the less restriction the battery encounters in delivering the needed power. Thus, the growth of the internal resistance should be low during the battery's life. The internal resistance or Direct Current Resistance (DCR) is measured by suitable pulse tests of the battery. The measurement of DCR is for example described in "Appendix G, H, I and J of the USABC Electric Vehicle Battery Test Procedures" which can be found at http://www.uscar.org. USABC stands for "US advanced battery consortium" and USCAR stands for "United States Council for Automotive Research".

To improve the power performance of Li-ion batteries, many approaches have been tried to reduce the internal resistance of the cells, especially at the side of the positive electrode. One major approach is metal doping of positive electrode active materials. In particular, some patents disclosed doping with relatively heavy metals. US2007/0212607 discloses Zr and Nb doping of Li₁₊ₓ(Ni_{y}Co_{z}Mn_{1-y-z})₁₋ₓO₂ for improving the DC resistance property of lithium ion batteries. In US2012/0276446 Mo, Ta and W doping of the same type of NMC materials is disclosed, to reduce the DC resistance of batteries. These heavy metal elements can have a high valence state such as a tetra-, penta- or hexa-valent state, and can form many oxides with Li - having different lithium to metal ratios. By doping these elements into positive electrode active materials, lithium heavy metal oxides can be formed on the surface of the positive electrode materials and thus play a role in supporting Li diffusion and suppression of side reactions with the electrolyte, which may further reduce the internal resistance of the batteries. Nevertheless, this approach leads to a decrease of cathode energy density by the addition of a heavy element, and an increase of cost. Another related approach is the addition of lithium heavy metal oxides to the slurry of the positive electrode, as is described in US2015/0021518. The addition of a few mole% of lithium tungsten oxide in the slurry reduces the initial DC resistance of the corresponding NMC and NCA / carbon cells. However, the DC resistance growth of these cells during cycling is important.

WO2001/013443 discloses an electrode active material comprising particles of spinel lithium manganese oxide LMO (LiMn₂O₄) enriched with lithium by a decomposition product of lithium hydroxide forming a part of each of the LMO particles. The spinel LMO product is characterized by a reduced surface area and increased capacity retention (reduced capacity fading). In a process to obtain the Li-enriched spinel material the LMO is added to a solution or suspension of lithium hydroxide in a suitable solvent. Suitable solvents include water or alcohol, such as methanol, ethanol, and the like. The lithium hydroxide is pre-dried in air at a temperature of about 200° C. for up to about sixteen hours. Thereafter the mixture is subjected to heating. This heating step is carried out at a temperature high enough to initiate the decomposition of the lithium hydroxide on the surface of the individual particles of the LMO. Preferably, the temperature is high enough to essentially completely decompose the lithium hydroxide, leaving behind a lithium-enriched spinel. Heating is conducted for a duration of time sufficient to thermally decompose the lithium hydroxide onto the LMO. The heating step is conveniently performed at a temperature in the range of about 300 to 500° C.. After this step the dried surface treated LMO is mixed with a binder and a conductive agent (carbon) in a solvent such as EC, DMC, DEC, etc. before being cast as a film on the elecrode carrier.

As further prior art there is EP2523240, disclosing a process for producing a lithium-transition metal compound powder, the process comprising: a step in which a lithium compound, a compound of at least one transition metal selected from V, Cr, Mn, Fe, Co, Ni and Cu, and a compound represented by a structural formula that includes at least one element selected from the group consisting of As, Ge, P, Pb, Sb, Si and Sn, are pulverized in a liquid medium to prepare a slurry which contains these compounds evenly dispersed therein; a spray drying step in which the slurry is spray-dried; and a burning step in which the resultant spray-dried powder is burned at 950 degrees centigrade or higher in an oxygen-containing gas atmosphere. Also there is US2017/0207442 providing a method of preparing a battery electrode, comprising the steps of:
1) pre-treating an active battery electrode material in a first aqueous solution comprising water and having a pH from about 2.0 to about 7.5 to form a first suspension;
2) drying the first suspension to obtain a pre-treated active battery electrode material;
3) dispersing the pre-treated active battery electrode material, a conductive agent, and a binder material in a second aqueous solution to form a slurry;
4) homogenizing the slurry by a homogenizer to obtain a homogenized slurry;
5) applying the homogenized slurry on a current collector to form a coated film on the current collector; and
6) drying the coated film on the current collector to form the battery electrode.

The current invention aims to further develop positive electrode systems containing layered lithium metal oxides as active material and traditional binder materials such as PVDF, where the electrode has a low internal resistance during battery cycling and storage, whilst at the same time maintaining a high capacity and an improved cycle life even at high temperature.

### Summary

Viewed from a first aspect, the invention can provide a positive electrode slurryfied mixture used in the manufacturing of a rechargeable battery, the mixture comprising:
- a positive electrode active material comprising a lithium metal-based oxide, the metal in the lithium metal-based oxide comprising either one or more of Ni, Mn, Al and Co;
- a carbon-based conductivity enhancer; and
- a binder material that is soluble in a polar aprotic solvent, characterized in that the mixture further comprises a powderous alkali hydroxyde compound having a water content less than 5 wt%. The slurryfied mixture may have a water content less than 1 wt% versus the total content of solids in the mixture. Experiments have shown that the internal water content of the alkali hydroxide is more important than the water being present additionally in the other slurry constituents, but in order to obtain the desired effect on the viscosity it may be important to limit the total water content in the slurry. In different embodiments the lithium metal-based oxide may comprising Ni and Co and either one or both of Mn and Al; or the lithium metal-based oxide may have a α-NaFeO₂ type layered structure.

The alkali hydroxyde compound may be either one of LiOH, NaOH and KOH. In an embodiment, the binder material is water insoluble. In another embodiment the binder material is either one of PVDF, polyvinylidene fluoride/ hexafluoropropylene copolymer (PVDF-co-HFP), polyacrylonitrile, polymethylmetacrylate, polytetrafluoroethylene (PTFE), or mixtures thereof. In a further embodiment, the slurryfied mixture further comprises a polar aprotic solvent being either one of tetrahydrofuran (THF), ethyl acetate (EtOAc), acetone, dimethyformamide (DMF), acetonitrile (MeCN), dimethyl sulfoxide (DMSO) and propylene carbonate (PC).

In these embodiments it may be preferred that the internal or structural water content of the powderous alkali hydroxyde compound is less than 1 wt%, or even less than 0.3 wt%. An optimal water content may be the result of a balance of the cost of drying the standard grade LiOH and the efficiency of the dried LiOH in lowering slurry viscosity. It may also be that the content of the alkali hydroxyde compound in the electrode composition is between 0.01 and 5 wt% versus the total content of solids in the mixture, or between 0.01 and 1 wt%, and preferably 0.02 to 0.3 wt%. These preferred quantities are guaranteeing the desired effect is obtained by defining a lower limit, and keep the used quantity as low as possible to lower material and handling cost. If too much hydroxide compound is added the capacity of the electrode is decreased.

In these different embodiments, the lithium metal-based oxide may have the general formula Liₓ(N_{1-y}N'_{y})₂₋ₓO₂, where 0.9≤x≤1.1, 0≤y<0.1, wherein N is either one or more of Mn, Co and Ni; and N' is either one or more of Mg, Al and Ti. In an embodiment N comprises Co and Ni and either one or both of of Al and Mn. The crystal structure of such materials is an α-NaFeO₂ type layered structure (R3m spacing group). The crystal structures of LiCoO₂ and LiNiO₂ also belong to a hexagonal crystal system which belongs to the above-mentioned structure. More particularly the lithium metal-based oxide's formula may be Li_{1+x'}(Ni_{1-y'-z'}Mn_{y'}Co_{z'})_{1-x'}O₂, with -0.03≤x'<0.10; 0.1≤y'≤0.4 and 0.1≤z'≤0.4. Furthermore, the carbon-based conductivity enhancer may be either one of graphite, acetylene black, carbon fibers, carbon nanotubes, Ketjen Black and Super P, or mixtures thereof.

The slurryfied mixture of the previous embodiments may have a viscosity at a shear rate of 0.1 s⁻¹ of less than 100 Pa.s, and preferably less than 70 Pa.s. Also, the slurryfied mixture may have a viscosity at a shear rate of 10 s⁻¹ of less than 10 Pa.s, and preferably less than 5 Pa.s. Finally, the slurryfied mixture may have a viscosity does not increase when the slurryfied mixture is kept in a humidification chamber for at least 3 days. It has been experimentally determined that these boundaries are effective to reach the intended inventive goal. As the dispersion of the solid fraction in the slurry is improved, it becomes possible to industrially handle slurries with a higher than usual solids content, i.e. up to 70 or even 75wt% of solids in the slurryfied mixture, where a normal content is less than 65wt%.

Viewed from a second aspect, the invention can provide a method for preparing a positive electrode for a lithium secondary battery, the method comprising the steps of:
- providing a mixture of a powderous positive electrode active material, a carbon-based conductivity enhancer, a binder material dissolved in a polar aprotic solvent and a an alkali hydroxyde compound having a water content of less than 5 wt%,
- mixing said mixture under further addition of the polar aprotic solvent, thereby obtaining a slurryfied mixture,
- coating the slurryfied mixture on a current collector, and
- drying the coated slurryfied mixture between 85 and 120°C in a vacuum oven. The method may thus provide a positive electrode using a slurryfied mixture as defined in the first aspect of the invention. In this method, the mixture may have a composition of solids with between 80 and 95 wt% of powderous positive electrode active material, between 2 and 5 wt% of binder material, between 2 and 5 wt% of carbon-based conductivity enhancer and between 0.01 and 5 wt% of alkali hydroxyde compound, wherein the composition of solids adds up to 100 wt%. Also, the positive electrode active material may have the general formula Liₓ(N_{1-y}N'_{y})₂₋ₓO₂, where x=0.9-1.1, 0≤y<0.1, wherein N is either one or more of Mn, Co and Ni; and N' is either one or more of Mg, Al and Ti. In an embodiment, the polar aprotic solvent is an electronic grade N-methyl-2-pyrrolidone, and in another embodiment, the alkali hydroxyde compound is a battery grade LiOH.H₂O. The slurrified mixture may have a water content less than 1 wt% versus the total content of solids in the slurryfied mixture.

### Brief introduction of the drawings

Figure 1: Full cell testing of Example 1 (black dots) versus Counter Example 1 (grey triangle) at 25°C and at 45°C. % of capacity (axis A) versus cycles numbers (axis B)
Figure 2 : Evolution of DCR in full cell of Example 1(black dots) and Counter Example 1 (grey triangle) at 25°C and at 45°C. DCR growth (axis A) versus cycles numbers (axis B)
Figure 3 : Discharge Rate performance in full cell of Example 1 (black dots) and Counter Example 1 (grey triangle) at 25°C. % of capacity (axis A) versus applied current (C rate) (axis B), in double logarithmic scale.

### Detailed description

This invention provides a slurry and process for manufacturing positive electrodes for rechargeable lithium ion batteries, which can maintain a low internal resistance, high capacity, an improved stability during cycling and an improved power behavior of the batteries at both room and elevated working temperatures that realistically occur in a battery. The key factor to obtain the advantages of the invention is the use of suitable additives in an electrode slurry composition, by incorporating specific additives separately in the slurry, or by providing them in the slurry as a blend of additives with active material. As is explained in US2016/0365571, such a slurry or paste or ink normally contains a binder, such as polyvinylidene fluoride (PVDF), a polar aprotic solvent, such as N-methyl-2-pyrrolidone (NMP), and an additive for improving the conductivity, such as carbon black. In the invention, an extra additive is added. The additive is a powderous alkali metal hydroxide, such as lithium hydroxide, sodium hydroxide or potassium hydroxide, or mixtures of these. The additive is well dispersed in the electrode composition, hence in the mixture discrete alkali metal hydroxide particles are intimately in contact with the other constituents.

Regarding WO2001/013443 mentioned as prior art, it is known that chemical reactions may occur between LiOH on the surface of cathode material and the electrolyte, and mainly by a HF-mediated reaction CO₂ is generated. This it is explained for example in "Mechanism of gas evolution from the cathode of lithium-ion batteries at the initial stage of high-temperature storage" in Journal of Materials Science 48(24) · December 2013, pp. 8457-8551. Therefore the addition of LiOH in a cathode electrode could not seem interesting at first because LiOH is known to be partially responsible for gas formation at high temperature which causes undesired swelling and distortion of the Lithium-ion battery. In the present invention however, the LiOH is added during the slurry preparation in order to optimize the dispersion of active material and carbon in the electrode ink and, by consequence, optimize the coverage of the particles by the binder polymeric molecules. As a result, the main part of the hydroxyde will be kept between the surface and the binder and thus will not be in contact with the electrolyte and this subsequently limits the gas formation.

For achieving the positive effects of the invention, the inventors undertook a thorough study of the relationship between the viscosity of the slurry used to prepare the positive electrodes, and the improved electrochemical characteristics of the battery the invention aims to achieve. It has been found that the viscosity of the cathode slurry is a good indicator of the future performance of the electrode. As can be expected, a well dispersed material has a direct impact on the viscosity. When the particles of active material as well as the conductive additive are not aggregated this results in an improved viscosity, as the viscosity is linked to the size of the particle clusters. A low viscosity at low shear rate indicates a good dispersion of the particles, which in turn will lead in the electrode to a very homogeneous dispersion of particles and an optimum electronic network. The invention can thus provide a positive electrode slurry composition with an improved viscosity which indicates a perfect dispersion of the different particles, and which guarantees an easy electrode casting process.

Without being bound by theory the inventors believe that this can be explained as follows: it is known that the addition of a hydroxide in water will modify the zeta-potential of immersed particles. This zeta potential will influence the dispersion degree of the particles in water due to the presence of concentrated positive or negative charges on their surface that mutually repulse each other. In the case of a polar aprotic solvent, such as NMP that is normally used for dissolving the common PVDF based binder, the zetapotentiel is more complex to define. Nevertheless, the inventors believe that the dispersion of active material as well as a conductive agent (such as black carbon or nanotubes) will be much improved. The hydroxide will be dissociated and solubilized in NMP or any other polar aprotic solvent. It was not obvious that the addition of a hydroxide such as LiOH could have this effect. Nevertheless, the observation of a drop in viscosity of the slurry of active material and carbon in NMP by the addition of LiOH clearly demonstrates the improvement of the dispersion. The theoretical explanation is that during the ink preparation, after the hydroxyde being solubilized in the organic solvent (NMP), the OH⁻ ion will enter in interaction will the surface of the cathode material and carbon additiveto form a "wet" shell of OH⁻ or a layer that is highly concentrated in OH⁻ around the active cathode particles. This shell will not only improve the dispersion of each particle but will probably also modify the interaction particle-binder, because the "position" of the hydroxyde molecule will be maintained during the subsequent drying step, during which the binder will progressively be nearer and nearer to the particles and the particles be also nearer and nearer to each other. Thus the OH⁻ will precipitate - probably with the Li⁺ also in solution - but will progressively be trapped between 2 particles and between particles and binder chains. In fact, because of the charge distribution in the solvation shell around the particles, the OH⁻ will most likely be trapped, and at least a majority of hydroxyde will not be in direct contact with the electrolyte when the battery will be assembled.

It was found that the LiOH is to be dry enough to avoid any negative interaction with water, because water will act as a catalyzer for the formation of LiF (known as the Li-ion poison) in the HF-mediated reaction. The presence of big quantities of water, which is the case when using a standard ("not dry") grade LiOH.H₂O - having a LiOH content of only 55-56.5 wt%, the rest being crystal water (besides unavoidable impurities) - in NMP, does not allow a dispersion of the solid material, as will be demonstrated in the Examples.

It should be mentioned here that to reduce the viscosity of a slurry, many approaches have been published in the past years. KR2015-0025665 teaches that the addition of a copolymer - comprising a main chain of ionic characteristics and side chains of non-ionic surfactant characteristics - as dispersing agent in a positive electrode slurry improves the dispersibility of the cathode material and conductive agent. US2015-0364749 discloses an electrode active material and conductive agent dispersion having a full zeta-potential while maintaining a stable state of a mixed material, and thereafter mixing the electrode active material dispersion and the conductive agent dispersion to thus prepare an electrode active material slurry, thereby having the effects of, compared with a conventional method, being capable of uniformly dispersing an electrode active material and a conductive agent within an electrode active material slurry. These prior art documents are related to an addition of a dispersing agent in a water based slurry. The improvement of the dispersion in an organic (NMP) based slurry is more difficult, and no disclosures describing how to improve the dispersion in this case were found in the prior art.

In the experiments the most common slurry components were used, i.e. the positive active material, a PVDF binder dissolved in NMP, and carbon black as conductive agent. It is obvious that instead of PVDF, other known binders such as (and not limited to) polyvinylidene fluoride/hexafluoropropylene copolymer (PVDF-co-HFP), polyacrylonitrile, polymethylmetacrylate, polytetrafluoroethylene (PTFE), or mixtures thereof can be used. Also, instead of NMP, other polar aprotic solvents such as (and not limited to) tetrahydrofuran (THF), ethyl acetate (EtOAc), acetone, dimethyformamide (DMF), acetonitrile (MeCN), dimethyl sulfoxide (DMSO) and propylene carbonate (PC) can be used. As carbon-based conductivity enhancer, a carbon black-based conductive material such as graphite or acetylene black, or carbon fibers, carbon nanotubes, Ketjen Black, Super P or mixtures thereof may be used.

This invention observes that when an alkali hydroxide is added to the slurry of the positive electrode during full cell preparation, 1-the obtained slurry has a lower viscosity at low shear rate and 2- the cells obtained from that slurry present much better capacity retention (or cycle stability) during charge and discharge at room temperature, and more particularly at elevated temperature, and they have an improved DCR and a better capacity at high rate of discharge. The hydroxide remains in the electrode composition that is coated on the current collector after drying of the slurry to eliminate the organic solvent.

The additive particles according to the invention can be described as alkali metal hydroxide (MₐOH) particles such as LiOH, NaOH or KOH, having a water content lower than 5 wt%, preferably lower than 1 wt%, and more preferably lower than 0.3 wt% . The "dry" alkali metal hydroxide is obtained by drying a standard grade having a content of 55-56 wt% of LiOH in LiOH.H₂O at 150°C for 12 hr. Commercial battery or high purity LiOH grades having a LiOH content of 99.0 or 99.3 wt% are also available, eg. from Targray. These have a water content down to less than 500ppm, or less than 300ppm, or even ≤200ppm. The alkali metal hydroxide powder may be milled before its use to avoid agglomeration and to eliminate coarse fractions >500 µm, and a milled powder may be obtained with a D50 between 10 and 50 µm. During the milling operation the crystal water is not decomposed. It is also important to mention that the LiOH is dried immediately before the addition in the slurry to avoid any recondensation of water. The additive particles according to the invention can be dispersed as a separate phase in the positive electrode slurry or the additive particles can be softly blended with the cathode active material before their integration in the slurry. The electrode slurry containing the active material and the additives according to the invention further contains a solvent, binder and conductive additive, and may be prepared using conventional means such as discussed by Liu et al. in "An effective mixing for lithium ion battery slurries", Advances in Chemical Engineering and Science, 2014, 4, 515-528. The slurry is coated on a current collector by known methods.

In a particular embodiment, the positive electrode in this invention comprises (after evaporation of the solvent):
- active material with the formula Liₓ(N_{1-y}N'_{y})₂₋ₓO₂, where x=0.9-1.1, 0≤y<0.1, wherein N is either one or more of Mn, Co and Ni; and N' is either one or more of Mg, Al and Ti;
- 0.01-1 wt%, and preferably 0.02-0.3 wt% of additive having the formula MₐOH, as described before;
- about 5 wt% of carbon, which is typically conductive carbon black;
- about 5 to less than 10 wt% of fluorinated polymer, which is typically PVDF;
- a current collector, which is generally an Al foil.
The wt% are expressed versus the total weight of material coated on the current collector. This positive electrode can be used in rechargeable lithium ion batteries that benefit from both a low initial resistance and a low resistance growth during cycling, as well as from a high capacity and long cycle life.

The following description details the methods for shaping the full cells and analyzing them in the Examples:

### A) Full cell making

650 mAh pouch-type cells are prepared by the following two steps: I. Slurry making and coating and II. Full cell assembly.

### I. Slurry making and coating

A slurry is prepared by mixing 700g of a mass production cathode material powder (for example : NMC 111 (Li_{1.09}[Ni_{0.34}Mn_{0.33}Co_{0.33}]_{0.91}O₂)) (Cellcore® grade from Umicore Korea), 47.19g of super P® (conductive carbon black of Denka) and 393.26g of 10 wt% PVDF based binder in an NMP solution. The mixture is mixed for 2.5 hrs in a planetary mixer. During the mixing additional NMP is added, as well as 0.05 wt% of additives according to the invention. The mixture is transferred to a Disper Mixer (Dispermat®) and mixed for 1.5 hrs under further NMP addition. A typical total amount of NMP used is about 425g. The final solid content in the slurry is about 65 wt%. The slurry viscosity is measured according to the method described below. The slurry is transferred to a coating line, where electrodes coated on both sides of the current collector are prepared. The electrode surface is smooth, and its loading is 9.6mg/cm². The electrodes are compacted by a roll press to achieve an electrode density of about 3.2g/cm³. The electrodes are used to prepare pouch cell type full cells as described hereafter.

From the data above it can be deduced that a typical slurry contains about 790g of solids and 425g of NMP. The specifications of the electronic grade NMP used in the lithium secondary battery industry show - for safety reasons - a water content of less than 300 ppm, but practically the contents measured are <=100 ppm, and can even be as low as 40 ppm. Expressed versus the total content of solids in the slurry the water content contribution by NMP corresponds to at most 160 ppm, and more typically it is below 100 ppm. Super P® has a specification of <0.1 wt% H₂O, for the amount added in the solids the maximum contribution from the conductive carbon to the water content in the slurry is around 65 ppm versus the total content of solids. Mass production cathode material powders have a maximum water content of 300 ppm, where the typical content is around 150 ppm. Based on its standard composition, the slurryfied mixture may preferably have a water content less than 1 wt% versus the total content of solids in the mixture for the additive to have its desired effect.

### II. Full cell assembly

For full cell testing purposes, the prepared positive electrode (cathode) is assembled with a negative electrode (anode) which is typically a graphite type carbon, and a porous electrically insulating membrane (as separator). The full cell is prepared by the following major steps:
a) Electrode slitting: after slurry coating the electrode active material might be slit by a slitting machine. The width and length of the electrode are determined according to the battery application;
b) Attaching the tabs: there are two kinds of tabs. Aluminum tabs are attached to the positive electrode (cathode), and copper tabs are attached to the negative electrode (anode);
c) Electrode drying: the prepared positive electrode (cathode) and negative electrode (anode) are dried at 85°C to 120°C for 8 hrs in a vacuum oven;
d) Jellyroll winding: after drying the electrode a jellyroll is made using a winding machine. A jellyroll consists of at least a negative electrode (anode) a porous electrically insulating membrane (separator) and a positive electrode (cathode);
e) Packaging: the prepared jellyroll is incorporated in a 650 mAh cell with an aluminum laminate film package, resulting in a pouch cell. Further, the non-aqueous electrolyte solution is impregnated for 8 hrs at room temperature. The battery is pre-charged at 15% of its theoretical capacity and aged for 1 day, also at room temperature. The battery is then degassed under vacuum for 30 seconds, and the aluminum pouch is sealed.
f) Formation: the sealed battery is prepared for use as follows: the battery is charged using a current of 0.25C (with 1C = 650 mA) in CC/CV mode (constant current/constant voltage) up to 4.2V with an end condition of cut-off current of C/20. Then the battery is discharged in CC mode at 0.5C rate down to a cut-off voltage of 2.7V. Finally, the battery is charged back to 4.2V under a C-rate of 0.5C in CC/CV mode. After the formation step, the full cell with SOC (state of charge) of 100% is considered to be a "fresh cell", ready for the "Full cell cycling test" below.

### B) Full cell cycling test

The lithium secondary full cell batteries after "formation" step (f)) are charged and discharged several times under the following conditions, both at 25°C and 45°C, to determine their charge-discharge cycle performance:
- The charge is performed in CC mode under 1C rate up to 4.2V, then CV mode until C/20 is reached,
- The cell is then set to rest for 10 min,
- The discharge is done in CC mode at 1C rate down to 2.7V,
- The cell is then set to rest for 10 min,
- The charge-discharge cycles proceed until the battery reaches 80% retained capacity. Every 100 cycles, a discharge is done at 0.2C rate in CC mode down to 2.7V. The retained capacity at the "n"th cycle is calculated as the ratio of the discharge capacity obtained at cycle n to the discharge capacity of cycle 1.

### C) Full cell DCR test

The DC resistance is obtained from the voltage response to current pulses, the procedure used is according to USABC standard (United States Advanced Battery Consortium LLC). The DC resistance is very relevant for practical application because data can be used to extrapolate fade rates in the future to make prognoses of the battery life, moreover the DC resistance is very sensitive to detect damage to the electrodes, because reaction products of the reaction between electrolyte and anode or cathode precipitate as low conductive surface layers.

### D) Discharge power signature test - rate performance

The lithium secondary full cell batteries after "formation" step (f)) are charged and discharged several times at 25°C under the following conditions:
- The charge is performed in CC mode under 1C rate up to 4.2V, then CV mode until C/20 is reached,
- The cell is then set to rest for 10 min,
- The discharge is done in CC mode at C/5 rate down to 2.7V,
- The cell is then set to rest for 10 min,
- The following cycles will follow similar step with a discharge current being consecutively, C/2, C, 2C, 3C, 4C, 5C and 10C. The rate performance is expressed by dividing the discharge capacity at resp. C/2, C, 2C, 3C, 4C, 5C and 10C by the discharge capacity at C/5.

### E) Measurement of the viscosity

The measurement is made with a Rheometer from TA instruments Korea. After standard calibration and stabilization of the temperature to 25°C, the geometric gap is set at 50µm; then, the measurement of viscosity is done by applying a shear rate from 0.1 s⁻¹ to 100 s⁻¹. Traditionaly, the viscosity versus shear rate is plotted in logarithmic scale. In this application, the focus is on 2 viscosity values: the value obtained with a shear rate of 10 s⁻¹ and the value for a shear rate of 0.1 s⁻¹. The shear rate at 10 s⁻¹ is similar to the stimulation during the casting of the electrode. This value needs to be within a specific range of viscosity, since if the slurry is too liquid, coating on the electrode carrier will not be possible; if the slurry is too viscous, the slurry will stick to the coating roll. A desired value for the shear rate at 10 s⁻¹ is between 20 and 1 Pa.s, and preferably less than 5 Pa.s. The value measured at 0.1 s⁻¹ (and compared with the value obtained at 10 s⁻¹) gives an indication of the thixotropic nature of the slurry, i.e. its varying viscosity according to the shear rate applied. If the 2 values are nearly equal then the viscosity is independent from the shear rate, indicating an ideal dispersion. For a cathode slurry, if the viscosity measured at 0.1 s⁻¹ is lower than 100 Pa.s, this indicates that the particles are well dispersed. For higher values, the particles are attached to each other by forces such as the Van der Waals forces which create a type of network that is not broken at low shear rate, influencing directly on the viscosity. A preferred range for the viscosity measured at 0.1 s⁻¹ may thus be higher than the viscosity measured at 10 s⁻¹ and lower than 100 Pa.s, and preferably lower than 80 or even 70 Pa.s.

The invention is further illustrated in the following examples:

### Example 1: Addition of LiOH in cathode slurry

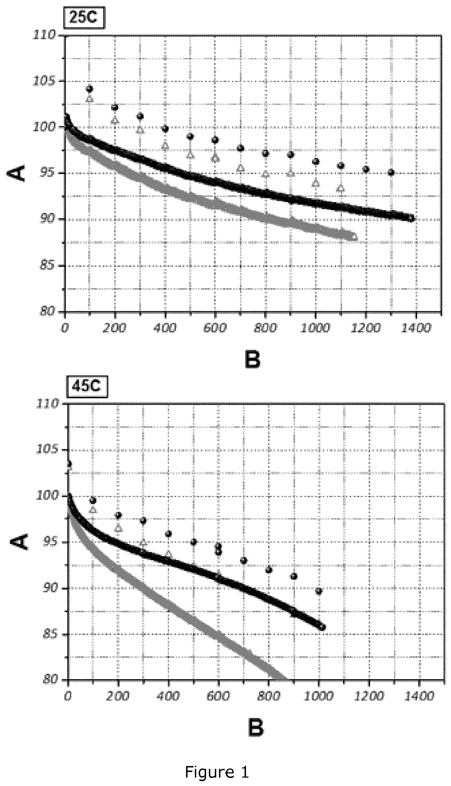

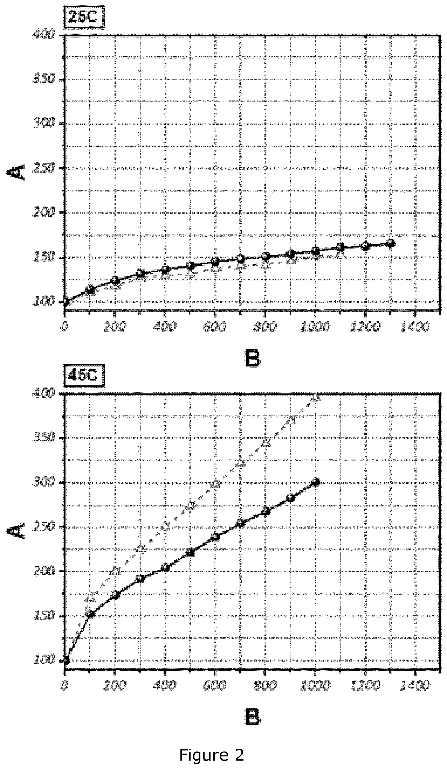

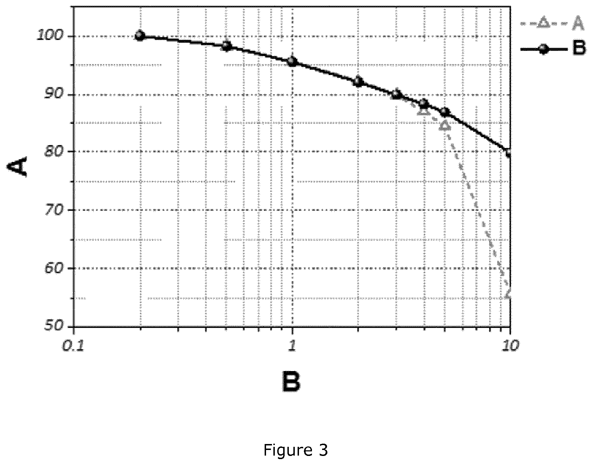

In this example 0.05 wt% of LiOH having a water content of 0.14 wt% is added according to the previous description under A) to an electrode composed of commercial Cellcore® NMC 111 called MX3 (having a D50 around 3 µm). This electrode is used to assemble and test cells as described previously. This example describes the effect of the electrode additives on:
- the viscosity of the slurry
- the cycle life (or capacity retention) properties of a full cell (according to method B) and shown in Figure 1), where the discharge capacity (% of initial capacity) is plotted against the cycle number (#).
- the DCR evolution during cycling (according to method C) and shown in Figure 2), where the DCR growth (in %) is plotted against the cycle number (#).
- the discharge power profile or rate performance of fresh full cells (= full cells prepared after the formation step), as shown in Figure 3, where the capacity is plotted against the discharge current (C rate).
The results are summarized in Table 1.

### Counter Example 1: Reference material: no addition of LiOH in cathode slurry

In this example, the procedure of Example 1 is followed without the addition of LiOH nor any other additive according to the invention. The results for Counter Example 1 are summarized in Table 1.

**Table 1 :**

| | Unit/definition | Example 1 | Counter Example 1 |
|---|---|---|---|
| Viscosity | At shear rate of 10 s⁻¹ (Pa.s) | 1.59 | 15.54 |
| | At shear rate of 0.1 s⁻¹ (Pa.s) | 58.45 | 368.12 |
| Cycle life | After 1000 cycles, 25°C | 94% | 88% |
| | After 800 cycles, 45°C | 87% | 82% |
| Rate Performance | Capacity at 5C vs. capacity at C/5 , 25°C | 80% | 56% |
| DCR growth after 1000 cycles | At 25°C | 160% | 150% |
| | At 45°C | 300% | 400 % |

In the Examples, cycle life is expressed by the capacity after cycle "n" calculated in % of the capacity of cycle 1. Similarly, DCR growth is calculated in % versus the resistance at the initial cycle, the latter having a value set at 100%.

The addition of lithium hydroxide has a clear impact on the viscosity, which is then translated to a drastic improvement of the battery performance. The cycle life - particularly at 45°C - is much improved. The capacity at high current rate is also strongly improved. These improvements are directly linked to the decrease of DCR. The DCR is an indicator of the good electronic percolation inside the electrode due to the improved material dispersion. The electronic network being optimal, the electrolyte decomposition at the surface of the cathode material as well as the material degradation due to local resistance is limited. The experiments show that it is sufficient to monitor the viscosity of the slurry to be able to influence the electrochemical performance of the full cells.

### Example 2: Impact of mixing approach and water content of the additive.

This series of examples demonstrates that an improvement of the dispersion cannot be obtained by a pure mechanical approach, namely by a increase of mixing energy to try to improve the dispersion. In this example, the slurry and electrode are prepared as described previsouly, using as active material Cellcore® NMC 111 grade having a D50 around 7 µm. The slurry is mixed with or without mixing beads to test the effect of the mixing energy on the dispersion, using a planetary mixer for 2.5 hr at 140RPM, followed by a Disper Mixer for 1.5 hr at 3600RPM. When beads are used, 6 beads of 10mm diameter are added per 50g of dry material (cathode + conductive agent + binder). Also, 0.3 wt% of LiOH is added, both in a dry grade according to the invention (in this case having a H₂O content of 0.19 wt%) and in a standard LiOH.H₂O "not dry" grade. The electrodes are used to assemble and test cells as described previously. This example describes the effect of the electrode additives on:
- the viscosity of the slurry after the mixing step, and 5 days later. The slurry is kept 5 days in a humidification chamber with a soft mixing (that is a mixing at very low RPM sufficient to avoid sedimentation) to follow the evolution of the viscosity over time and test the effect of time on the dispersion of material; and on
- the capacity retention properties of a full cell (method B))

The viscosity measurements and battery performances are summarized in Table 2. The viscosity measurements clearly show that a mixing step with or without beads has no influence on the material dispersion; that is to say that even with an increase of mixing energy and the impact of beads in the slurry during mixing, the dispersion or the de-agglomeration of particles is not improved. The example also shows the importance to add dry hydroxide in the slurry; the presence of water in a standard grade LiOH will probably decrease the improvement of the interaction surface-electrolyte (material-NMP) and thus limit the positive effect on the viscosity and later on the battery performance. The fact that the viscosity does not increase or decrease over time in the presence of dry LiOH also demonstrates the dispersion effect of the dried LiOH by avoiding any re-agglomeration after the dispersion of material, since any re-agglomeration is translated in an increase of the viscosity as in the -Reference or the addition of "wet LiOH".

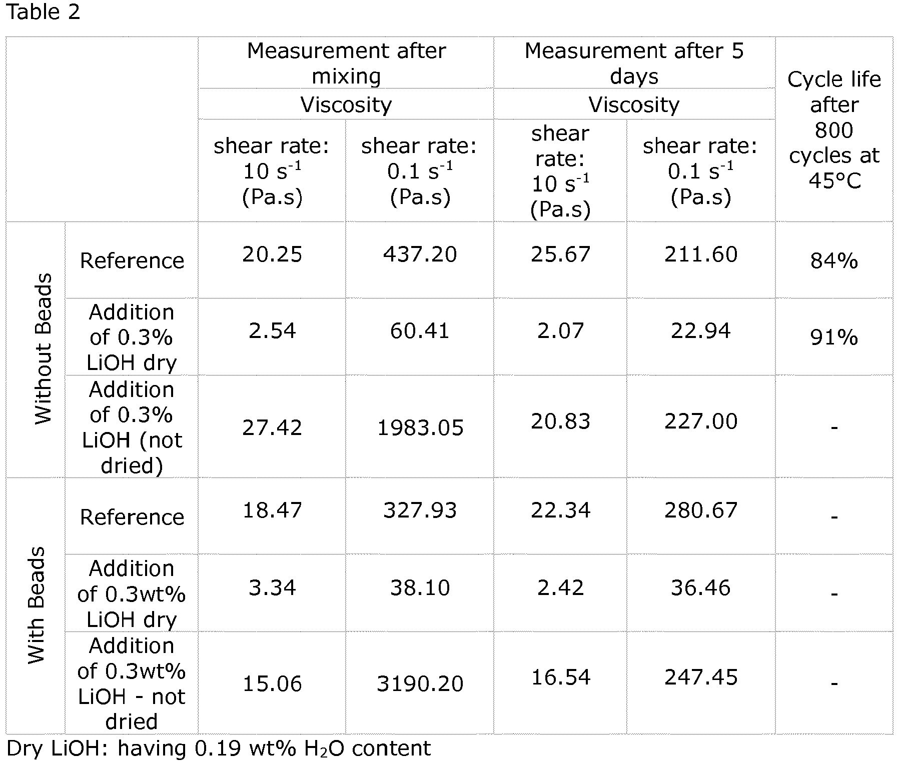

In a second experiment, the slurry and electrode are made as described previously using Cellcore® NMC 111 grade having a D50 around 7 µm. In this experiment, the impeller speed of a mixing device is varied to measure the influence of increasing energy input in the slurry. The viscosity measurements and battery performances are summarized in Table 3. In the same way as before, despite an increase of mixing energy (increase of mixing speed), the dispersion and de-agglomeration of the particles is not improved when no LiOH is added.

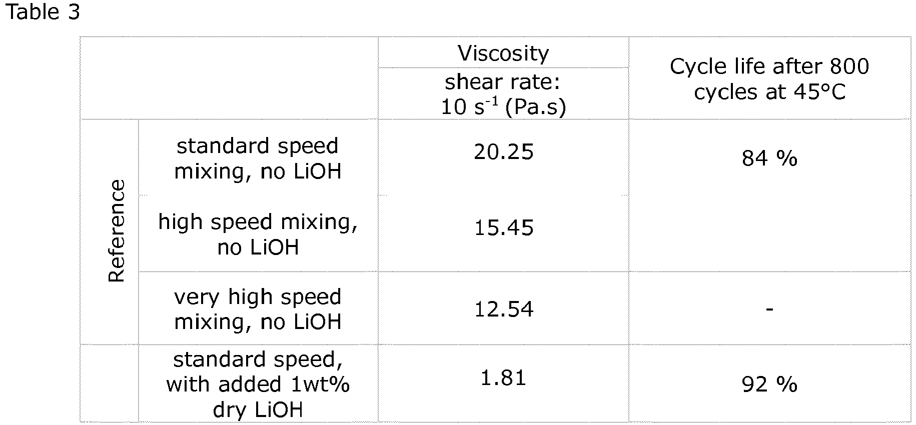

The mixing step is performed as follows:
- standard speed mixing: Planetary mixer 2.5 hr at 140rpm, then Dispermat® 1.5 hrs at 3600rpm
- high speed mixing: Planetary mixer 2.5 hr at 140rpm, then Dispermat® 1.5 hrs at 5000rpm
- very high speed mixing: Planetary mixer 2.5 hr at 140rpm, then Dispermat® 1.5 hrs at 6500rpm
Here the water content in the LiOH is 0.5 wt%.

### Example 3: Type of additive

This example demonstrates that only the alkali hydroxyde addition has a positive impact on the viscosity i.e. on the dispersion of carbon and active material. The reference of this example was made with 5g of conductive agent (carbon super P), 5g of PVDF and 45g of NMP. Similar values of viscosity are obtained with other types of carbon additives. The slurry is mixed in the Dispermat® at 2000rpm during 5 min, with addition of beads. To this reference then either 0.5g or 0.15g of additive are added, as is mentioned in Table 4 below. The reference viscosity measured at a shear rate of 10 s⁻¹ is 11.2 Pa.s, and a viscosity at 0.1 s⁻¹ measured of 354.16 Pa.s. The addition of LiOH, KOH or NaOH significantly reduces the viscosity, which clearly indicates an improved dispersion. All the other tested additives have no or very limited impact on the viscosity, which clearly demonstrates the unique role of the alkali hydroxides.

**Table 4**

| | Viscosity | | Viscosity | |
|---|---|---|---|---|
| | shear rate: 10 s⁻¹ (Pa.s) | shear rate: 0.1 s⁻¹ (Pa.s) | shear rate: 10 s⁻¹ (Pa.s) | shear rate: 0.1 s⁻¹ (Pa.s) |
| Reference (no additive) | 11.23 | 354.16 | 11.23 | 354.16 |
| | 0.50g of additive | | 0.15g of additive | |
| LiOH | 1.65 | 4.82 | 2.07 | 11.20 |
| NaOH | 1.73 | 6.34 | 4.05 | 63.77 |
| KOH | 4.06 | 24.88 | 2.47 | 21.89 |
| LiCl | 12.48 | 386.87 | 12.07 | 222.12 |
| NaCl | 13.68 | 599.00 | 12.89 | 387.81 |
| KCI | 13.66 | 419.12 | 12.84 | 380.96 |
| LiC | 11.14 | 90.30 | 10.44 | 254.35 |
| Na₂C | 9.25 | 261.12 | 11.35 | 318.01 |
| Acrylic acid | 15.58 | 525.54 | 23.57 | 1229.09 |
| Citric acid | 14.35 | 412.45 | 14.00 | 358.36 |
| HCL | 12.67 | 326.35 | 13.09 | 344.44 |
| LiPF₆ | 13.45 | 336.42 | 13.52 | 346.35 |
| Li₂SO₄ | 10.73 | 280.57 | 11.69 | 276.29 |
| Na₂S₂O₈ | 10.26 | 242.97 | 11.36 | 260.49 |
| Li Formiate | 10.38 | 226.41 | 11.33 | 372.07 |
| Na Formiate | 3.36 | 92.37 | 10.57 | 319.62 |
| K Formiate | 10.12 | 269.16 | 9.85 | 241.59 |

## Claims

1. A positive electrode slurryfied mixture used in the manufacturing of a rechargeable battery, the mixture comprising:
- a positive electrode active material comprising a lithium metal-based oxide, the metal in the lithium metal-based oxide comprising either one or more of Ni, Mn, Al and Co;
- a carbon-based conductivity enhancer; and
- a binder material that is soluble in a polar aprotic solvent, **characterized in that** the mixture further comprises a powderous alkali hydroxyde compound having a water content less than 5 wt%.

2. The slurryfied mixture of claim 1, wherein the binder material is water insoluble.

3. The slurryfied mixture of claim 1 or 2, wherein the binder material is either one of PVDF, polyvinylidene fluoride/hexafluoropropylene copolymer (PVDF-co-HFP), polyacrylonitrile, polymethylmetacrylate, polytetrafluoroethylene (PTFE), or mixtures thereof.

4. The slurryfied mixture of any one of claims 1 to 3, wherein the slurryfied mixture further comprises a polar aprotic solvent being either one of tetrahydrofuran (THF), ethyl acetate (EtOAc), acetone, dimethyformamide (DMF), acetonitrile (MeCN), dimethyl sulfoxide (DMSO) and propylene carbonate (PC).

5. The slurryfied mixture of any one of claims 1 to 4, wherein the water content of the powderous alkali hydroxyde compound is less than 1 wt%.

6. The slurryfied mixture of any one of claims 1 to 5, wherein the alkali hydroxyde compound is either one of LiOH, NaOH and KOH.

7. The slurryfied mixture of any one of claims 1 to 6, wherein the content of the alkali hydroxyde compound in the electrode composition is between 0.01 and 5 wt% versus the total content of solids in the mixture.

8. The slurryfied mixture of any one of claims 1 to 7 having a water content less than 1 wt% versus the total content of solids in the mixture.

9. The slurryfied mixture of any one of claims 1 to 8, wherein the lithium metal-based oxide has an α-NaFeO₂ type layered structure.

10. The slurryfied mixture of any one of claims 1 to 9, wherein the lithium metal-based oxide comprises Co and Ni and either one or both of Al and Mn.

11. The slurryfied mixture of any one of claims 1 to 9, wherein the lithium metal-based oxide has the general formula Liₓ(N_{1-y}N'_{y})₂₋ₓO₂, where 0.9≤x≤1.1, 0≤y<0.1, wherein N is either one or more of Mn, Co and Ni; and N' is either one or more of Mg, Al and Ti.

12. The slurryfied mixture of any one of claim 11, wherein N is either composed of Ni, Co and Al or of Ni, Co and Mn.

13. The slurryfied mixture of any one of claims 1 to 12, wherein the carbon-based conductivity enhancer is either one of graphite, acetylene black, carbon fibers, carbon nanotubes, Ketjen Black and Super P, or mixtures thereof.

14. The slurryfied mixture of any one of claims 1 to 12, wherein the total content of solids in the mixture is between 65 and 75wt%.

15. A method for preparing a positive electrode for a lithium secondary battery, the method comprising the steps of:
- providing a mixture of a powderous positive electrode active material, a carbon-based conductivity enhancer, a binder material dissolved in a polar aprotic solvent and a an alkali hydroxyde compound having a water content of less than 5 wt%,
- mixing said mixture under further addition of the polar aprotic solvent, thereby obtaining a slurryfied mixture,
- coating the slurryfied mixture on a current collector, and
- drying the coated slurryfied mixture between 85 and 120°C in a vacuum oven.

16. The method according to claim 15, wherein the mixture has a composition of solids with between 80 and 95 wt% of powderous positive electrode active material, between 2 and 5 wt% of binder material, between 2 and 5 wt% of carbon-based conductivity enhancer and between 0.01 and 5 wt% of alkali hydroxyde compound, wherein the composition of solids adds up to 100 wt%.

17. The method according to claim 15 or 16, wherein the positive electrode active material has the general formula Liₓ(N_{1-y}N'_{y})₂₋ₓO₂, where 0.9≤x≤1.1, 0≤y<0.1, wherein N is either one or more of Mn, Co and Ni; and N' is either one or more of Mg, Al and Ti.

18. The method according to any one of claims 15 to 17, wherein the polar aprotic solvent is an electronic grade N-methyl-2-pyrrolidone.

19. The method according to any one of claims 15 to 18, wherein the alkali hydroxyde compound is a battery grade LiOH.H₂O.

## Patentansprüche

1. Aufgeschlämmte Positivelektrodenmischung, die bei der Herstellung einer wiederaufladbaren Batterie verwendet wird, wobei die Mischung umfasst:
- ein aktives Material für eine positive Elektrode, umfassend ein Oxid auf Lithiummetallbasis, wobei das Metall in dem Oxid auf Lithiummetallbasis eines oder mehrere von Ni, Mn, Al und Co umfasst;
- einen Leitfähigkeitsverstärker auf Kohlenstoffbasis; und
- Bindemittelmaterial, das in einem polaren aprotischen Lösungsmittel löslich ist, **dadurch gekennzeichnet, dass** die Mischung ferner eine pulverförmige Alkalihydroxidverbindung umfasst, die einen Wassergehalt von weniger als 5 Gew.-% aufweist.

2. Aufgeschlämmte Mischung nach Anspruch 1, wobei das Bindemittelmaterial wasserunlöslich ist.

3. Aufgeschlämmte Mischung nach Anspruch 1 oder 2, wobei das Bindemittelmaterial eines von PVDF, Polyvinylidenfluorid/Hexafluorpropylen-Copolymer (PVDF-co-HFP), Polyacrylnitril, Polymethylmethacrylat, Polytetrafluorethylen (PTFE) oder Mischungen davon ist.

4. Aufgeschlämmte Mischung nach einem der Ansprüche 1 bis 3, wobei die aufgeschlämmte Mischung ferner ein polares aprotisches Lösungsmittel umfasst, das eines von Tetrahydrofuran (THF), Ethylacetat (EtOAc), Aceton, Dimethylformamid (DMF), Acetonitril (MeCN), Dimethylsulfoxid (DMSO) und Propylencarbonat (PC) ist.

5. Aufgeschlämmte Mischung nach einem der Ansprüche 1 bis 4, wobei der Wassergehalt der pulverförmigen Alkalihydroxidverbindung weniger als 1 Gew.-% beträgt.

6. Aufgeschlämmte Mischung nach einem der Ansprüche 1 bis 5, wobei die Alkalihydroxidverbindung eines von LiOH, NaOH und KOH ist.

7. Aufgeschlämmte Mischung nach einem der Ansprüche 1 bis 6, wobei der Gehalt der Alkalihydroxidverbindung in der Elektrodenzusammensetzung zwischen 0,01 und 5 Gew.-%, bezogen auf den Gesamtgehalt an Feststoffen in der Mischung, beträgt.

8. Aufgeschlämmte Mischung nach einem der Ansprüche 1 bis 7, die einen Wassergehalt von weniger als 1 Gew.-%, bezogen auf den Gesamtgehalt an Feststoffen in der Mischung, aufweist.

9. Aufgeschlämmte Mischung nach einem der Ansprüche 1 bis 8, wobei das Oxid auf Lithiummetallbasis eine Schichtstruktur vom Typ α-NaFeO₂ aufweist.

10. Aufgeschlämmte Mischung nach einem der Ansprüche 1 bis 9, wobei das Oxid auf Lithiummetallbasis Co und Ni und entweder eines oder beide von Al und Mn umfasst.

11. Aufgeschlämmte Mischung nach einem der Ansprüche 1 bis 9, wobei das Oxid auf Lithiummetallbasis die allgemeine Formel Liₓ(N_{1-y}N'_{y})₂₋ₓO₂ aufweist, wobei 0,9≤x≤1,1, 0≤y<0,1 ist, wobei N eines oder mehrere von Mn, Co und Ni ist; und N' eines oder mehrere von Mg, Al und Ti ist.

12. Aufgeschlämmte Mischung nach Anspruch 11, wobei N entweder aus Ni, Co und Al oder aus Ni, Co und Mn zusammengesetzt ist.

13. Aufgeschlämmte Mischung nach einem der Ansprüche 1 bis 12, wobei der Leitfähigkeitsverstärker auf Kohlenstoffbasis eines von Graphit, Acetylenruß, Kohlenstofffasern, Kohlenstoffnanoröhrchen, Ketjen Black und Super P oder Mischungen davon ist.

14. Aufgeschlämmte Mischung nach einem der Ansprüche 1 bis 12, wobei der Gesamtgehalt an Feststoffen in der Mischung zwischen 65 und 75 Gew.-% beträgt.

15. Verfahren zum Herstellen einer positiven Elektrode für eine Lithiumsekundärbatterie, das Verfahren umfassend die folgenden Schritte:
- Bereitstellen einer Mischung aus einem pulverförmigen Aktivmaterial für eine positive Elektrode, einem Leitfähigkeitsverstärker auf Kohlenstoffbasis, einem Bindemittelmaterial, das in einem polaren aprotischen Lösungsmittel gelöst ist, und einer Alkalihydroxidverbindung, die einen Wassergehalt von weniger als 5 Gew.-% aufweist,
- Mischen der Mischung unter weiterer Zugabe des polaren aprotischen Lösungsmittels, wodurch eine aufgeschlämmte Mischung erhalten wird,
- Auftragen der aufgeschlämmten Mischung auf einen Stromkollektor, und
- Trocknen der aufgetragenen aufgeschlämmten Mischung zwischen 85 und 120 °C in einem Vakuumofen.

16. Verfahren nach Anspruch 15, wobei die Mischung eine Zusammensetzung von Feststoffen mit zwischen 80 und 95 Gew.-% pulverförmigem Aktivmaterial für positive Elektroden, zwischen 2 und 5 Gew.-% Bindemittelmaterial, zwischen 2 und 5 Gew.-% kohlenstoffbasiertem Leitfähigkeitsverstärker und zwischen 0,01 und 5 Gew.-% Alkalihydroxidverbindung aufweist, wobei sich die Zusammensetzung von Feststoffen auf 100 Gew.-% summiert.

17. Verfahren nach Anspruch 15 oder 16, wobei das aktive Material der positiven Elektrode die allgemeine Formel Liₓ(N_{1-y}N'_{y})₂₋ₓO₂ aufweist, wobei 0,9≤x≤1,1, 0≤y<0,1 ist, wobei N eines oder mehrere von Mn, Co und Ni ist; und N' eines oder mehrere von Mg, Al und Ti ist.

18. Verfahren nach einem der Ansprüche 15 bis 17, wobei das polare aprotische Lösungsmittel ein N-Methyl-2-Pyrrolidon einer für Elektronik geeigneten Qualität ist.

19. Verfahren nach einem der Ansprüche 15 bis 18, wobei die Alkalihydroxidverbindung ein LiOH.H₂O einer für Batterien geeigneten Qualität ist.

## Revendications

1. Mélange en suspension épaisse pour électrode positive utilisé dans la fabrication d'une batterie rechargeable, le mélange comprenant :
- un matériau actif d'électrode positive comprenant un oxyde à base de lithium-métal, le métal dans l'oxyde à base de lithium-métal comprenant soit un soit plusieurs parmi Ni, Mn, Al et Co ;
- un activateur de conductivité à base de carbone ; et
- un matériau liant qui est soluble dans un solvant polaire aprotique, **caractérisé en ce que** le mélange comprend en outre un composé hydroxyde alcalin pulvérulent ayant une teneur en eau inférieure à 5 % en poids.

2. Mélange en suspension épaisse selon la revendication 1, dans lequel le matériau liant est insoluble dans l'eau.

3. Mélange en suspension épaisse selon la revendication 1 ou 2, dans lequel le matériau liant est l'un ou l'autre parmi PVDF, copolymère de fluorure de polyvinylidène/hexafluoropropylène (PVDF-co-HFP), polyacrylonitrile, polyméthylméthacrylate, polytétrafluoroéthylène (PTFE), ou mélanges de ceux-ci.

4. Mélange en suspension épaisse selon l'une quelconque des revendications 1 à 3, dans lequel le mélange en suspension épaisse comprend en outre un solvant polaire aprotique étant l'un ou l'autre parmi tétrahydrofurane (THF), acétate d'éthyle (EtOAc), acétone, diméthylformamide (DMF), acétonitrile (MeCN), sulfoxyde de diméthyle (DMSO) et carbonate de propylène (PC).

5. Mélange en suspension épaisse selon l'une quelconque des revendications 1 à 4, dans lequel la teneur en eau du composé hydroxyde alcalin pulvérulent est inférieure à 1 % en poids.

6. Mélange en suspension épaisse selon l'une quelconque des revendications 1 à 5, dans lequel le composé hydroxyde alcalin est l'un ou l'autre parmi LiOH, NaOH et KOH.

7. Mélange en suspension épaisse selon l'une quelconque des revendications 1 à 6, dans lequel la teneur en composé hydroxyde alcalin dans la composition d'électrode est comprise entre 0,01 et 5 % en poids comparativement à la teneur totale en matières solides dans le mélange.

8. Mélange en suspension épaisse selon l'une quelconque des revendications 1 à 7 ayant une teneur en eau inférieure à 1 % en poids comparativement à la teneur totale en matières solides dans le mélange.

9. Mélange en suspension épaisse selon l'une quelconque des revendications 1 à 8, dans lequel l'oxyde à base de lithium-métal a une structure en couches de type α-NaFeO₂.

10. Mélange en suspension épaisse selon l'une quelconque des revendications 1 à 9, dans lequel l'oxyde à base de lithium-métal comprend Co et Ni et soit un soit l'un et l'autre parmi Al et Mn.

11. Mélange en suspension épaisse selon l'une quelconque des revendications 1 à 9, dans lequel l'oxyde à base de lithium-métal a la formule générale Liₓ(N_{1-y}N'_{y})₂₋ₓO₂, où 0,9≤x≤1,1, 0≤y<0,1, dans lequel N est soit un soit plusieurs parmi Mn, Co et Ni ; et N' est soit un soit plusieurs parmi Mg, Al et Ti.

12. Mélange en suspension épaisse selon l'une quelconque parmi la revendication 11, dans lequel N est composé soit de Ni, Co et Al soit de Ni, Co et Mn.

13. Mélange en suspension épaisse selon l'une quelconque des revendications 1 à 12, dans lequel l'activateur de conductivité à base de carbone est l'un ou l'autre parmi graphite, noir d'acétylène, fibres de carbone, nanotubes de carbone, noir Ketjen et Super P, ou des mélanges de ceux-ci.

14. Mélange en suspension épaisse selon l'une quelconque des revendications 1 à 12, dans lequel la teneur totale en matières solides dans le mélange est comprise entre 65 et 75 % en poids.

15. Procédé de préparation d'une électrode positive pour une batterie secondaire au lithium, le procédé comprenant les étapes consistant à :
- fournir un mélange d'un matériau actif d'électrode positive pulvérulent, d'un activateur de conductivité à base de carbone, d'un matériau liant dissous dans un solvant polaire aprotique et d'un composé hydroxyde alcalin ayant une teneur en eau inférieure à 5 % en poids,
- mélanger ledit mélange sous addition supplémentaire du solvant polaire aprotique, ce qui permet d'obtenir un mélange en suspension épaisse,
- revêtir le mélange en suspension épaisse sur un collecteur de courant, et
- sécher le mélange en suspension épaisse revêtu entre 85 et 120 °C dans une étuve sous vide.

16. Procédé selon la revendication 15, dans lequel le mélange a une composition en matières solides avec entre 80 et 95 % en poids de matériau actif d'électrode positive pulvérulent, entre 2 et 5 % en poids de matériau liant, entre 2 et 5 % en poids d'activateur de conductivité à base de carbone et entre 0,01 et 5 % en poids de composé hydroxyde alcalin, dans lequel la composition en matières solides s'élève à 100 % en poids.

17. Procédé selon la revendication 15 ou 16, dans lequel le matériau actif d'électrode positive a la formule générale Liₓ(N_{1-y}N'_{y})₂₋ₓO₂, où 0,9≤x≤1,1, 0≤y<0,1, dans lequel N est soit un soit plusieurs parmi Mn, Co et Ni ; et N' est soit un soit plusieurs parmi Mg, Al et Ti.

18. Procédé selon l'une quelconque des revendications 15 à 17, dans lequel le solvant polaire aprotique est une N-méthyl-2-pyrrolidone de qualité électronique.

19. Procédé selon l'une quelconque des revendications 15 à 18, dans lequel le composé hydroxyde alcalin est un LiOH.H₂O de qualité batterie.
